(19)

**Europäisches Patentamt**

**European Patent Office**

**Office européen des brevets**

(11) **EP 4 664 209 A1**

(12) **EUROPEAN PATENT APPLICATION**

(43) Date of publication:
**17.12.2025  Bulletin 2025/51**

(21) Application number: **24182048.9**

(22) Date of filing: **13.06.2024**

(51) International Patent Classification (IPC):
**G05B 13/02** (2006.01)     **G05B 13/04** (2006.01)

(52) Cooperative Patent Classification (CPC):
**G05B 13/024; G05B 13/042**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **ABB SCHWEIZ AG**
**5400 Baden (CH)**

(72) Inventors:
• **RASTEGARPOUR, Soroush**
**723 59 Västerås (SE)**

• **ISAKSSON, Alf**
**723 53 Västerås (SE)**
• **KUBAL, Nandkishor**
**411033 PUNE (IN)**
• **HOLLENDER, Martin**
**69221 Dossenheim (DE)**
• **MUNUSAMY, Sudhakar**
**635103 Hosur (IN)**
• **RODRIGUEZ, Pablo**
**69488 Birkenau (DE)**

(74) Representative: **Kransell & Wennborg KB**
**P.O. Box 27834**
**115 93 Stockholm (SE)**

(54) **SELECTING CONTROL ALGORITHM FOR CONTROLLING AN INDUSTRIAL PROCESS**

(57)     The present disclosure relates to a method for controlling an industrial process (1). The method comprises monitoring, over time, at least one process variable of the industrial process. The method also comprises, at each of a plurality of consecutive time points, selecting a control algorithm, from a group of predefined control algorithms, for controlling the industrial process based on said monitored at least one process variable. The method also comprises using the latest selected control algorithm to control the industrial process. The selecting comprises selecting the control algorithm which optimizes a predefined function including value(s) of the monitored at least one process variable at said time point and a preset penalty for switching from a currently used control algorithm, of the group of control algorithms, to another one of said control algorithms.

**6 Industrial Plant**

**10 Controller**

4

5

**2 Sensor**

**3 Actuator**

**1 Industrial Process**

Fig. 1

EP 4 664 209 A1

**Description**

**TECHNICAL FIELD**

The present disclosure relates to selecting a control algorithm and using the selected control algorithm for controlling an industrial process.

**BACKGROUND**

In the context of continuous processes, e.g. within chemical plants, when facing disruptions or unfavourable conditions, the process control system should be able to deploy various control algorithms to maintain the optimal operation and avoid a process shut down. For instance, in the traditional safety control blocks, if there is a sudden increase in temperature or pressure, the system may activate emergency shutdown procedures.

Real-Time Optimization (RTO) and Advanced Process Control (APC) chains have valuable applications in industries such as for stabilizing chemical reactors, controlling complex heat exchanger networks, robotics control, and path planning for marine vessels. However, achieving effective Model Predictive Control (MPC) design relies on accurate models, which can be challenging to obtain. A data-driven approach to adapt the MPC model is a logical solution, but fitting a model to data may not always yield optimal results and could lead to adverse effects.

Alternatively, reinforcement learning (RL) is a model-free solution that finds optimal control policy by directly interacting either with the simulator or the process. It offers significant effectiveness in handling diverse operational conditions, varying disturbances, and infrequent events while ensuring stability, optimality, and adaptability. Nevertheless, the ability to ensure closed-loop process behaviour is challenged in environments that encompass uncertainties, unmodeled dynamics, nonlinearities, and complexities representing the underlying process.

Robust RL and Safe RL present viable options for addressing these limitations. These techniques typically incorporate constraints or safety specifications into the RL algorithms, guiding the agent's behaviour to stay within predefined boundaries and avoid actions that may result in dangerous outcomes. However, these methods may not be well-suited for situations necessitating an exceptionally robust controller, such as shutdown limits.

Rule-based control systems, on the contrary, can handle uncertainties and disturbances relatively well, as the rules can be designed to accommodate a wide range of scenarios, taking advantage of the expert domain knowledge, technical documentation, and available process know-how. They are robust solutions for some critical conditions, where more advanced algorithms are not be able to operate at. However, they have difficulty in scalability, adaptability and potentially lead to suboptimal control performance.

Each of these control algorithms, as well as any other solutions such as manual control by a human operator, possesses distinct advantages that can be leveraged depending on the specific process conditions. However, the industry faces a challenge in lacking an efficient orchestration methodology capable of seamlessly and efficiently switching among these algorithms to govern them appropriately for the given conditions.

**SUMMARY**

It is an objective of the present invention to provide an improved method for over time selecting among available control algorithms for controlling an industrial process, typically comprising a continuous process such as a chemical reactor process.

According to an aspect of the present invention, there is provided a method for controlling an industrial process. The method comprises monitoring, over time, at least one process variable of the industrial process. The method also comprises, at each of a plurality of consecutive time points, selecting a control algorithm, from a group of predefined control algorithms, for controlling the industrial process based on said monitored at least one process variable. The method also comprises using the latest selected control algorithm to control the industrial process. The selecting comprises selecting the control algorithm which optimizes a predefined function including value(s) of the monitored at least one process variable at said time point and a preset penalty for switching from a currently used control algorithm, of the group of control algorithms, to another one of said control algorithms.

According to another aspect of the present invention, there is provided a controller for controlling an industrial process, the controller comprising processing circuitry, and storage storing instructions executable by said processing circuitry whereby said controller is operative to perform an embodiment of the method of the present disclosure.

According to another aspect of the present invention, there is provided a computer program product comprising computer-executable components for causing a controller to perform an embodiment of the method of the present disclosure when the computer-executable components are run on processing circuitry comprised in the controller.

By, at each time point, selecting a control algorithm based on the value of the monitored process variable at said time point, the currently used algorithm, or another one of the group of algorithms, can be selected for further use in view of said value of the monitored process variable. To avoid high-frequency switching (fluctuation) between different control algorithms, a penalty for switching from the currently used control algorithm to another one of the algorithms is included in the function to be optimized. Thus, the benefit of using another one of the control algorithms instead of the currently used control algorithm has to be large enough to overcome the switching penalty for said other control algorithm to be selected for further use. Otherwise, the currently used control algorithm will again be selected for further (continued) use.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

**BRIEF DESCRIPTION OF THE DRAWINGS**

Embodiments will be described, by way of example, with reference to the accompanying drawings, in which:

Fig 1 is a schematic block diagram of an industrial plant in accordance with some embodiments of the present invention.

Fig 2 is a schematic diagram of an industrial process in accordance with an example embodiment of the present invention.

Fig 3 is a schematic flow chart of some embodiments of the method of the present invention.

Fig 4 is a schematic block diagram of a controller in accordance with some embodiments of the present invention.

**DETAILED DESCRIPTION**

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

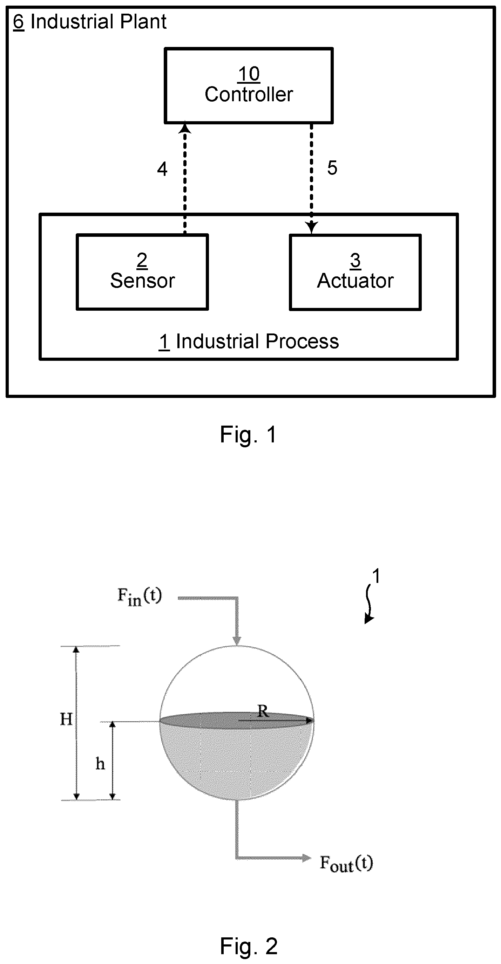

Figure 1 illustrates an industrial plant 6 comprising a controller 10 controlling an industrial process 1. The industrial process may be any type of process but typically is or comprises a continuous process, e.g. a chemical process. Examples of industrial processes comprise chemical reactors, complex heat exchanger networks, robotics control, and path planning for marine vessels.

The controller 10 monitors at least one process variable of the industrial process by receiving a sensor signal 4 from a sensor 2 detecting the monitored process variable. If the at least one process variable comprises a plurality of process variables, typically a respective sensor 2 detects each of the process variables and sends a sensor signal 4 to the controller 10. The sensor signal 4 comprises information indicative of a current value of the monitored process variable, whereby the controller is updated, typically continuously, with regard to the current value of the monitored process variable. The sensor 2 may have a predetermined sampling frequency, specifying the frequency at which the sensor detects the process variable and sends a sensor signal indicating the current value of the process variable to the controller 10, whereby the value of the monitored process variable is updated in a data storage of the controller. Thus, the controller 10, in its data storage, may always hold the latest updated value of the monitored process variable.

Based on the respective stored values of each of the at least one monitored process variable, the controller, at each of a plurality of consecutive time points, selects a control algorithm for further use, e.g. from that time or from a time in the future. The selected control algorithm may be the control algorithm which is already in use (active), in which case the currently used control algorithm is continued to be used until another control algorithm is selected. This may be the usual case since the value of the monitored process variable(s) may not fluctuate much over time and since there is the preset switching penalty in the function to be optimized. However, at some point(s) in time, the selected control algorithm may be a control algorithm which is not the one currently used. In that case, switching is performed from the currently used control algorithm to the selected control algorithm which is then used until the controller 10 again selects another control algorithm (e.g. the previously used control algorithm).

Regardless of the control algorithm used at any time, the industrial process 1 is typically controlled by manipulating a control variable in the industrial process. To achieve such manipulation, the controller 10 may output a control signal 5, e.g. to an actuator 3 which may operate e.g. a valve, pump or the like in the industrial process.

In accordance with the present invention, a novel algorithm to coordinate the performance of the controller 10 with multiple control algorithms is presented to maintain optimal operation, avoid process shutdowns, and improve the stability of the process 1 against various anticipated events.

Assume that we have a controller 10 provided with different types of control algorithms (e.g. handled by respective agents in the controller 10) each responsible for a specific task. These may include Robust RL, APC, Safe RL, Rule-Based Control, etc., which are typically in the third level of operation hierarchy of the controller, possibly with RTO in the fourth level thereof.

Each of these agents have typically been validated to ensure stability and optimal performance under specific conditions, e.g. as follows:

If the process 1 is under normal operating condition with an acceptable disturbance variation range, classic APC+RTO could be a suitable solution.

If the process 1 operates beyond the valid range of the APC+RTO system, more intelligent control algorithms could be selected to handle the operation. Robust RL and Safe RL are then possible selections, which may guarantee the stability of the process against abnormal conditions e.g. caused by unforeseen disturbances and model mismatches.

If the process 1 is experiencing critical conditions, a highly conservative Rule-based control algorithm may instead be selected. The Rule-based control algorithm may require seeking advice from domain experts, control engineers and process documentation to find the best logics and rules.

Now, for articulating a control problem with an objective to minimize process downtimes, while maintaining the process at its optimal operating point for extended durations.

To solve this control problem, an orchestrator within the controller 10 may be used for facilitating an autonomous decision-making process. This orchestrator may enable a smooth transition in the process control system to move over available solutions effectively and seamlessly to provide optimal performance.

This may require interactions with the process 1, e.g. by monitoring the at least one process variable, to correctly detect the state of the process and validity of each of the control algorithms (e.g. through a pretrained classifier) such that the orchestrator properly selects the right (optimal) control algorithm at any one of the time points.

The proposed solution may comprise to first define confidence intervals for the model employed in each agent as an assessment criterion for validity of the corresponding control algorithm. Uncertainty/mismatch propagation from learned characteristics may be incorporated into the confidence interval definition to correctly meet safety constraints.

The confidence interval may be made online to ensure more flexibility and adaptability to process conditions. This may be managed by adaptively updating the confidence interval in response to changing process operational conditions, e.g. with the assistance of an AI agent. The AI agent may be capable of detecting whether it encounters an unknown scenario and, if so, determining whether the currently used control algorithm can handle it. This approach results in a dynamic shape for the robustness boundary instead of a predefined corridor.

A second step may be to build up a map to predict how well the agents perform specific tasks. This may be done either in a simulated environment or with the real data collected from the real process 1. Similar confidence intervals criteria, as described above, may be used, and integrated over the complete duration of the operation. An example could be to try out which of the agents can best handle a specific grade change. Advantages compared to the instant evaluation of the process may include:

To avoid unnecessarily switching due to a short peak in the criteria.

To select the best agent from early on before an upset or instability event.

To have bump less switch-over leading to smoother performance.

Under the here proposed orchestration methodology, the decision-making process is carried out autonomously and smoothly, as it involves solving an optimization problem while adhering to specific constraints. The optimization problem may be subject to priority between the different control algorithms to maximize the profit (optimal performance), guarantee the stability and smoothness of the operation (robust performance), respect the safety constraints, minimize the fluctuations and abrupt changes on actuators (safe performance). The priority may be included in the optimization problem by assigning a respective algorithm cost for using each of the control algorithms. The algorithm cost for a control algorithm may e.g. be based on one or several of requirements for: maintenance, hardware, user interaction, user expertise, processing, energy consumption.

Embodiments of the method of the present invention may result in extended and highly efficient operation, minimizing process downtime and reducing the need for operator intervention.

On a general level, first the validity of the control algorithms may be detected and second the optimal transition path to the best control algorithm may be found. A control algorithm may be regarded as valid in a vicinity of the current operating point of the process 1 if it is capable of meeting its intended boundary conditions, while maintaining system stability.

Possible components of a control system in the controller 10 may include:

Classifier: to identify the validity of a model or control algorithm according to current or future operating points of the process 1.

Optimizer: to find out what is the best control algorithm to be selected for controlling the process 1.

Transition Manager: to handle transitions between control algorithms smoothly to avoid abrupt changes that could destabilize the process 1.

A classifier could be selected and trained in a way to be able to assign the correct probability of validity of the control algorithms being at each of the working modes of the process 1. Some examples of process working modes may include:

Normal operation (at a specific capacity): conditions when no abrupt change of the process variables is monitored, and the process 1 operates sufficiently stable close to the current operating point.

Startup: event of starting up a process 1 from a cold or inactive state.

Shutdown: event of shutting down a process 1 from a warm or critical state.

Grade-change: transition from one product grade to another with distinct characteristics (different quality constraints).

Turndown: event of operating at reduced capacity while maintaining product quality.

Upset: event of unexpected situations, such as equipment failure or deviation from normal operation.

Emergency: event that is activated in response to unexpected critical situations.

Any kind of appropriate classifiers may be used. Common choices include support vector machine (SVMs) or deep learning models like convolutional neural networks (CNNs). The selected classifier may be trained using sufficient training data (historical data) to learn to distinguish between those modes and then check the validity of each of the control algorithms according to the given process mode(s).

A mode change may sometimes be predictable depending on production planning or maintenance scheduling, however in most of the cases it is expected from classifier (orchestrator) to detect or suggest at which mode with which probability we are, or we need to move on.

Depending on the current or future working modes, valid control algorithms may be selected. The optimizer may receive the valid control algorithms to perform an optimal decision making for the best control algorithm selection for an optimal operation. A goal of an optimizer may be to determine when and how to switch between the control algorithms to optimize a certain performance criterion of the process 1 while ensuring process stability, profitability, and smoothness.

Let us consider a generic process whose dynamics are described by:

$$x[k+1] = f_i(x[k], u_i[k]) \ , \quad i = 1, .., m$$

where $f_i$ is the transition function of the process 1 associated with the optimal control algorithm $u_i$ for the i:th operational mode (normal, critical, startup, shutdown, etc.), $x$ is a state variable of the process 1 which is monitored (or estimated based on a monitored variable), e.g. the monitored process variable discussed herein, and $k$ is the time instant.

Let $J$ be the performance criterion to be optimized. It could be a cost function, such as a quadratic cost for state tracking or control effort or energy minimization. The overall performance criterion for the switching control problem may then be defined as:

$$ J = \sum_{k=1}^{m} L(x[k], u_i[k], i[k]) + \Upsilon_1 \, i[k] + \Upsilon_2 \, \Delta i[k] $$

where $m$ is the prediction horizon, $L$ is the instantaneous cost function, $i[k]$ is the index that specifies the currently used control algorithm at time instant $k$, and $\Delta i[k]$ is the variation of the $i[k]$ value.

The proposed cost function $J$ is provided with a priority term of $\gamma_1 \, i[k]$ to incorporate priority for control algorithm selection, and a preset switching penalty $\gamma_2 \Delta i[k]$ to avoid any undesired fluctuation among the control algorithms in a switching control problem.

In practice, the control algorithms may be sorted based on their priorities from the most important to the least important ones, for example:

1. RTO+APC

2. RL agent (robust and safe RL)

3. Rule-based

4. operator decision

The optimization problem tends to select the highest prioritized control algorithm by minimizing the priority term $i[k]$, while maintaining following boundary conditions:

Process dynamic: $x[k + 1] = f_i(x[k], u_i[k])$

Switching logic: $i[k] \in \{1, ..., m\}$

It may be assumed that all control algorithms are tuned in a way that they guarantee the path and rate constraints on the process's state variables and manipulated variables over their validity range.

One may formulate the proposed optimization problem as a mixed-integer optimization problem and solve it analytically by one of the available solvers. However, Mixed Integer Problems (MIPs) are generally hard problems, which means that as the problem size (number of variables and constraints) increases, the computational effort required to solve them can grow exponentially. This makes solving large-scale MIPs impractical in many cases.

In accordance with the present invention, we may use a tailored A-star graph search-based method for finding the optimal trajectory of control algorithm selection over the prediction horizon, while considering both the objective function minimization and constraints satisfaction.

Let us consider the proposed control objectives and cost as opposed above:

1. Starting from an initial condition for the states, actions, and cost value, i separate directions are expected, where i represents the number of valid control algorithms reported by the classifier.

2. Take a step in the environment to evaluate the cost value at the end of each direction, so-called node, according to its corresponding currently used control algorithm.

3. Select the node with the lowest cost value from the open set. This node may be the current node.

4. Expand the current node by considering all its neighbouring nodes defined by i.

5. Go back to step 2 and repeat until the end of the prediction horizon.

6. Conclude the optimal trajectory by backpropagation of the solutions.

The control algorithm switching request may be registered by the optimizer. If the transition manager determines that a switch between control algorithms is required, it plans the transition process. This may involve selecting a new control algorithm to switch to and preparing the necessary parameters, setpoints, initializations or configurations for the new control algorithm.

To ensure a smooth transition without abrupt changes in control outputs, the transition manager may implement bumpless transfer techniques. Bumpless transfer involves adjusting the output of the currently used control algorithm gradually to match the output of the new control algorithm. This minimizes disruptions in the controlled process. The transition manager may implement a fallback mechanism in case the transition fails or leads to undesirable results. This may involve reverting to a safe, default control algorithm, or manual operation.

Figure 2 illustrates an example process 1 which may be controlled by means of an embodiment of the present invention. The problem is to regulate the level h in a spherical tank at various heights. The tank has a radius R of 2, indicating that the maximum level H is 4 units. We have three PI controllers tuned for three different operating points (*lsp*):

1. Middle level: h = 2
2. Top level: h = 3.8
3. Bottom level: h = 0.15

The objective function may then be as follows:

$$J = \sum_{k=1}^{m} L(h[k],\ F_{in}[k], i[k]) + Y_1\ i[k] + Y_2\ \Delta i[k]$$

where,

$$L = \alpha \left| l_{sp} - h \right| + \beta \left| \Delta F_{in} \right| ; \alpha = 1, \beta = 1$$

$i$ = {$PI_1$, $PI_2$, $PI_3$} ; $i$ is the index of the control algorithms
$\gamma_1$ = {0, 5, 5} ; is the algorithm cost (priority) associated with each control algorithm (here zero cost for using control algorithm 1 and a cost of 5 for using either of control algorithms 2 or 3)
$\Delta i$ [$k$] ; is the variation of the *i[k]* value
$\gamma_2$ = 1.2 ; is the penalty for each switching

With the above objective function J, the controller 10 selects, at any of the time points, which of the control algorithms to use until the next time point and selection. Here, the monitored process variable is the level h, and the manipulated process variable may be either or both of the flow $F_{in}$ into the tank and the flow $F_{ont}$ out from the tank.

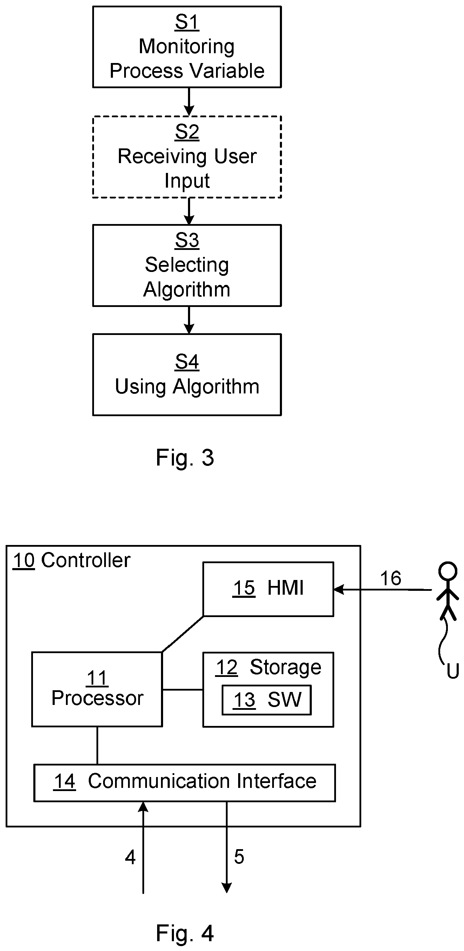

Figure 3 illustrates some embodiments of the method of the present invention. The method is for controlling the industrial process 1 and is typically performed by the controller 10. The method comprises monitoring S1, over time, at least one process variable of the industrial process 1. The method further comprises, at each of a plurality of consecutive time points, selecting S3 a control algorithm, from a group of predefined control algorithms, for controlling the industrial process based on said monitored S1 at least one process variable. The selected S3 control algorithm may be the currently already used control algorithm (no switch) or another one (new) of the control algorithm (resulting in switch from the currently used control algorithm to the new control algorithm). The method also comprises using S4 the latest selected S3 control algorithm to control the industrial process. It follows that, at any point in time, the latest selected S3 control algorithm is used (or possibly in the process of being implemented to be used). The selecting S3 comprises selecting the control algorithm which optimizes a predefined function, e.g. function J discussed above, including value(s) of the monitored S1 at least one process variable at said time point and a preset penalty for switching from the currently used S4 control algorithm, of the group of control algorithms, to another one of said control algorithms.

In some embodiments of the present invention, the cost function also includes a respective algorithm cost for using each of the control algorithms. This may result in a list of priority of the control algorithms, where each of the control algorithms is associated with a respective cost. The method may in some embodiments further comprise receiving S2, via a Human-Machine Interface (HMI) 15 (see figure 4) input 16 defining at least one of the respective algorithm costs, prior to selecting S3 the control algorithm. Thus, a user U may input information 16 to define/set one, some or all of the respective algorithm costs for each of the control algorithms, via the HMI 15.

In some embodiments of the present invention, the control algorithms include at least one of: Advanced Process Control (APC), e.g. Model Predictive Control (MPC) or any other advanced process control; Reinforcement Learning (RL), e.g. Robust RL and/or Safe RL; and Rule-based control. This non-exhaustive list gives examples of different types of control algorithms which may be useful with the present invention.

Additionally or alternatively, in some embodiments of the present invention, the control algorithms include a plurality of APC, or a plurality of RL, control algorithms, each tuned to a different mode of the industrial process 1. Thus, the group of control algorithms may comprise a plurality of control algorithms of the same type, but each tuned to respective different points of operation of the process 1.

Additionally or alternatively, in some embodiments of the present invention, Real-Time Optimization (RTO) is used for providing input to at least one of the control algorithms, e.g. APC.

In some embodiments of the present invention, the using S4 of the selected control algorithm to control the industrial process 1 comprises outputting a control signal 5 to manipulate a control variable of the industrial process.

Additionally or alternatively, in some embodiments of the present invention, the monitoring S1 comprises, for each of the at least one process variable, receiving a sensor signal 4 from a sensor 2 detecting the process variable.

In some embodiments of the present invention, wherein the industrial process 1 is, or comprises, a continuous process, e.g. a chemical process.

The present disclosure has mainly been described above with reference to a few embodiments. However, as is readily appreciated by a person skilled in the art, other embodiments than the ones disclosed above are equally possible within the scope of the present disclosure, as defined by the appended claims.

**Claims**

1. A method for controlling an industrial process (1), the method comprising:

   monitoring (S1), over time, at least one process variable of the industrial process;
   at each of a plurality of consecutive time points, selecting (S3) a control algorithm, from a group of predefined control algorithms, for controlling the industrial process based on said monitored (S1) at least one process variable; and
   using (S4) the latest selected (S3) control algorithm to control the industrial process;
   wherein the selecting (S3) comprises selecting the control algorithm which optimizes a predefined function including value(s) of the monitored (S1) at least one process variable at said time point and a preset penalty for switching from a currently used (S4) control algorithm, of the group of control algorithms, to another one of said control algorithms.

2. The method of claim 1, wherein the control algorithms include at least one of: Advanced Process Control, APC, e.g. Model Predictive Control, MPC; Reinforcement Learning, RL, e.g. Robust RL and/or Safe RL; and Rule-based control.

3. The method of claim 1 or 2, wherein the control algorithms include a plurality of APC, or a plurality of RL, control algorithms, each tuned to a different mode of the industrial process (1).

4. The method of any preceding claim, wherein the using (S4) of the selected control algorithm to control the industrial process comprises outputting a control signal (5) to manipulate a control variable of the industrial process (1).

5. The method of any preceding claim, wherein the monitoring (S1) comprises, for each of the at least one process variable, receiving a sensor signal (4) from a sensor (2) detecting the process variable.

6. The method of any preceding claim, wherein the cost function also includes a respective algorithm cost for using each of the control algorithms.

7. The method of claim 6, further comprising: receiving (S2), via a Human-Machine Interface, HMI, (15) input (16) defining at least one of the respective algorithm costs, prior to selecting (S3) the control algorithm.

8. The method of any preceding claim, wherein the industrial process (1) is, or comprises, a continuous process, e.g. a chemical process.

9. A controller (10) for controlling an industrial process (1), the controller comprising:

   processing circuitry (11); and
   storage (12) storing instructions (13) executable by said processing circuitry (11) whereby said controller (10) is operative to perform the method of any preceding claim.

10. A computer program product (12) comprising computer-executable components (13) for causing a controller (10) to perform the method of any one of claims 1-8 when the computer-executable components (13) are run on processing circuitry (11) comprised in the controller (10).

Fig. 1

Fig. 2

**S1**
Monitoring
Process Variable

**S2**
Receiving User
Input

**S3**
Selecting
Algorithm

**S4**
Using Algorithm

Fig. 3

**10** Controller

**15** HMI

16

**11**
Processor

**12** Storage

**13** SW

**14** Communication Interface

4

5

U

Fig. 4

Europäisches
Patentamt

European
Patent Office

Office européen
des brevets

## EUROPEAN SEARCH REPORT

**Application Number**

**EP 24 18 2048**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YU HANSONG ET AL: "A Controller-Dynamic-Linearization-Based Model Predictive Control Approach for SISO Discrete-time Nonlinear Systems", CONFERENCE: 2019 12TH ASIAN CONTROL CONFERENCE (ASCC, 27 October 2020 (2020-10-27), XP093226619, | 1-5,8-10 | INV. G05B13/02 G05B13/04 |
| Y | * abstract * * paragraphs [0002] - [0005] * ----- | 6,7 | |
| Y | US 2021/239347 A1 (WIENS-KIND GARRETT [US] ET AL) 5 August 2021 (2021-08-05) * abstract * * paragraph [0082] * ----- | 6,7 | |
| Y | US 8 600 561 B1 (MODI YASH [US] ET AL) 3 December 2013 (2013-12-03) * the whole document * ----- | 6,7 | |
| | | | TECHNICAL FIELDS SEARCHED (IPC) |
| | | | G05B |

The present search report has been drawn up for all claims

| Place of search | Date of completion of the search | Examiner |
|---|---|---|
| The Hague | 21 November 2024 | Schmitt, Gilles |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 18 2048

This annex lists the patent family members relating to the patent documents cited in  the above-mentioned European search report.
The members are as contained in the European Patent Office EDP file on
The European Patent Office is in no way liable for these particulars which are merely given for the purpose of information.

21-11-2024

| Patent document cited in search report | | Publication date | Patent family member(s) | | Publication date |
|---|---|---|---|---|---|
| US 2021239347 | A1 | 05-08-2021 | US | 2021239347 A1 | 05-08-2021 |
| | | | US | 2021240147 A1 | 05-08-2021 |
| US 8600561 | B1 | 03-12-2013 | US | 8600561 B1 | 03-12-2013 |
| | | | US | 2014156085 A1 | 05-06-2014 |
| | | | US | 2015134122 A1 | 14-05-2015 |

EPO FORM P0459

For more details about this annex : see Official Journal of the European Patent Office, No. 12/82